**Europäisches Patentamt**

**European Patent Office**

**Office européen des brevets**

(19)

(11) Numéro de publication : **0 130 133**
**B1**

(12)

# FASCICULE DE BREVET EUROPÉEN

(45) Date de publication du fascicule du brevet :
**02.12.87**

(51) Int. Cl.⁴ : **F 16 L 21/02**, F 16 L 47/06

(21) Numéro de dépôt : **84420105.3**

(22) Date de dépôt : **20.06.84**

(54) Bague d'étanchéité à implants pour tuyaux à emboîtement.

(30) Priorité : **22.06.83 FR 8310614**

(43) Date de publication de la demande :
**02.01.85 Bulletin 85/01**

(45) Mention de la délivrance du brevet :
**02.12.87 Bulletin 87/49**

(84) Etats contractants désignés :
**BE CH DE GB LI LU NL**

(56) Documents cités :
**DE-C- 957 704**
**GB-A- 890 775**
**GB-A- 1 031 360**
**GB-A- 1 041 441**
**US-A- 3 386 745**
**US-A- 3 520 541**
**US-A- 4 299 412**

(73) Titulaire : **SABLA, Société Anonyme**
**Bois de Serres 34, route d'Ecully**
**F-69570 Dardilly (FR)**

(72) Inventeur : **Roux, Marius**
**9 M, Montée des Soldats**
**F-69300 Caluire (FR)**

(74) Mandataire : **Ropital-Bonvarlet, Claude et al**
**Cabinet BEAU DE LOMENIE 99, Grande rue de la**
**Guillotière**
**F-69007 Lyon (FR)**

EP 0 130 133 B1

## Description

La présente invention concerne une bague d'étanchéité pour tuyaux emboîtables et elle vise, plus particulièrement, les bagues d'étanchéité mises en œuvre pour assurer l'étanchéité d'emboîtement de tuyaux comportant, à cet effet, un about collet et un about mâle destinés à coopérer.

Le domaine technique visé est, plus spécialement, celui des tuyaux en béton armé ou non, destinés à la réalisation de réseaux d'écoulement en fouille pour la circulation d'eaux usées domestiques ou industrielles ou d'eaux pluviales.

Un impératif majeur devant être respecté lors de la construction de tels réseaux en fouille réside dans l'étanchéité entre les abouts des tuyaux emboîtés.

En effet, il faut que les aboutements des tuyaux soient bien étanches pour éviter, soit la pollution du terrain environnant, dans le cas de circulation d'eaux fortement polluées, soit encore l'introduction d'eau en provenance du milieu ambiant et dont la proportion supplémentaire serait de nature à perturber le fonctionnement de stations d'épuration ou de traitement initialement conçues pour absorber un volume donné à l'unité de temps.

Dans le but ci-dessus, on a donc proposé de réaliser les tuyaux pour leur faire comporter à chaque extrémité un about femelle en forme de collet et un about mâle de diamètre extérieur inférieur à celui intérieur de l'about collet. Les surfaces périphériques, intérieure et extérieure, de ces abouts sont conformées de manière à permettre le montage intermédiaire d'une bague d'étanchéité généralement conçue pour assumer deux fonctions propres.

La première est le centrage des deux abouts après introduction et la seconde est la réalisation d'une étanchéité périphérique après mise à joint.

Une troisième fonction, généralement dévolue, est celle de faciliter la pénétration de l'about mâle dans l'about collet, de façon à permettre la mise à joint convenable jusque dans la position d'introduction maximale définissant un état de centrage étanche de l'about mâle à l'intérieur de l'about collet.

On a proposé, initialement, d'utiliser une bague de joint en forme d'élément torique, placée initialement dans une gorge délimitée dans l'about mâle ou l'about femelle.

On conçoit qu'un tel joint n'offre pas une capacité de déformation élastique suffisante pour répondre au premier impératif de centrage. Par suite, la mise en œuvre d'un tel joint implique, obligatoirement, une réalisation précise des portées cylindriques devant se faire face.

Dans le cas particulier de réalisation en béton, une telle exigence devient prohibitive à cause des moyens techniques devant être mis en œuvre.

Pour supprimer cet inconvénient, on a proposé d'utiliser des bagues de joint comportant une partie étudiée pour conférer une facilité d'introduction relative des abouts et pour établir une étanchéité convenable et une partie locale apte à supporter les contraintes radiales transmises par le milieu environnant, afin de maintenir un centrage entre les tuyaux.

De telles bagues d'étanchéité nécessitent un soin tout particulier de la part du personnel chargé d'assurer l'assemblage des tuyaux sur chantier. En effet, il est nécessaire de maintenir les abouts dans un état de propreté parfait et de placer chaque bague correctement, dans le sens choisi, de façon à permettre l'opération de mise à joint dans des conditions convenables et à obtenir un centrage étanche des tuyaux assemblés.

On a constaté que cette opération est généralement délicate à mener, compte tenu de la masse des tuyaux devant être déplacés relativement et implique une main-d'œuvre particulièrement qua-lifiée qui n'est pas toujours réunie sur chantier.

Par ailleurs, un nombre assez important de bagues d'étanchéité de conformations différentes est disponible sur le marché, de sorte que le choix ou l'utilisation de ces bagues doit tenir compte de leur compatibilité naturelle avec les tuyaux réalisés.

Pour tenter de supprimer ces différents inconvénients, certains fabricants ont envisagé d'incorporer immédiatement une bague d'étanchéité dans l'about femelle ou collet, de façon à éviter les aléas de pose et faciliter le travail du personnel sur chantier.

A cette fin, certaines propositions ont envisagé de délimiter un logement dans la paroi périphérique interne de l'about collet, afin d'y maintenir, sous contrainte, une bague d'étanchéité de conformation appropriée complémentaire. En pratique, on a constaté que cette technique possédait trois inconvénients majeurs.

Le premier est celui de l'obligation pour le fabricant d'acheter des bagues d'étanchéité, même pour les tuyaux réalisés dans un programme de fabrication à l'avance et destinés à être stockés sur parc pendant une durée parfois indéterminée. Cette obligation pénalise lourdement le fabricant.

Le second réside dans le fait qu'une bague d'étanchéité, même placée sous contrainte à l'intérieur d'un logement d'un about femelle, subit, avec le temps, un relâchement non négligeable de la contrainte qui lui est imposée. Il est fréquent de constater que de telles bagues n'occupent plus convenablement le logement qui leur est réservé après un temps de stockage relativement long ou sont, même, entièrement dégagées en posant alors un problème de remplacement aux équipes de pose sur chantier.

Le troisième réside dans le fait qu'il devient nécessaire de disposer d'un équipement spécifique pour réaliser de tels logements prévus à l'avance. En particulier, il est nécessaire de consentir un investissement important pour l'achat de bagues de moulage devant être mises en place sur les formes de moulage et de durcissement de chaque tuyau.

Comme dans certains cas l'utilisation de tuyaux de conformations ordinaires doit toujours être envisagée, cette obligation impose au fabricant de disposer de deux matériels de moulage venant alourdir notablement les frais de fonctionnement d'une unité de fabrication de tels tuyaux.

On connaît, par ailleurs, une autre proposition consistant à réaliser une bague d'étanchéité en lui faisant comporter une âme rigide indéformable, en forme de virole, noyée dans une masse de matière déformable élastiquement formant des moulures annulaires sur les faces périphériques extérieure et intérieure.

Ces bagues d'étanchéité apportent, incontestablement, des avantages par rapport aux solutions antérieures connues, car la rigidité de l'âme permet la mise en place dans un about collet sans risque de déplacement intempestif.

Ces bagues possèdent, cependant, un inconvénient tenant à l'obligation de les réaliser par moulage, afin d'obtenir un produit définitif de structure monolithe possédant une liaison résistante entre l'âme rigide et la matière déformable.

L'obligation de réaliser de telles bagues par moulage ne permet pas de conférer des profils particuliers en section droite transversale aux moulures déformables élastiquement ou, dans d'autres cas, de réaliser l'enrobage complet de l'âme indéformable.

Dans tous les cas donc, la bague ainsi conçue ne peut pas être exactement adaptée aux besoins et, notamment, présenter une faculté de compensation en rapport avec les tolérances de fabrication qui sont différentes entre un about mâle et un about femelle, compte tenu du procédé de fabrication d'un tuyau.

Dans le brevet US-A-4 299 412, on connaît une bague d'étanchéité ayant des caractéristiques qui sont comprises dans la première partie de la revendication 1. Cette bague est utilisée particulièrement pour des tuyaux à emboîtement en plastique.

L'objet de l'invention est de remédier à ces inconvénients en proposant une nouvelle bague d'étanchéité pouvant être réalisée, indifféremment, par un procédé de moulage ou d'extrusion, tout en offrant la possibilité de former des moulures déformables possédant, en section droite transversale, une conformation appropriée à l'objectif de centrage et d'étanchéité recherché.

Un autre objet de l'invention est de proposer une nouvelle bague d'étanchéité présentant la caractéristique d'offrir des masses de déformabilité différentielle, exactement adaptées aux tolérances de fabrication devant être compensées et présentées par les abouts femelle et mâle de tuyaux, notamment en béton.

Un autre objet de l'invention est de proposer une nouvelle bague pouvant être adaptée en contrainte de serrage dans un about collet ou femelle, soit en fonction d'une durée plus ou moins longue de stockage, soit en fonction de la nature de la matière déformable élastiquement.

Un autre objet encore de l'invention est de proposer une nouvelle bague offrant de grandes facilités de montage mécanisé ou automatisé à l'intérieur d'un about collet ou femelle d'un tuyau, sans risque de déplacement intempestif ultérieur, mais avec le possibilité de démontage éventuel lorsque cela est nécessaire.

Un objet supplémentaire de l'invention est de proposer une nouvelle bague présentant la particularité de disposer d'une réserve de produit lubrifiant qui est automatiquement expulsé lors de la mise à joint, de façon à faciliter la pénétration relative de l'embout mâle à travers la bague équipant l'embout collet ou femelle d'un tuyau.

Pour atteindre les buts ci-dessus, la bague d'étanchéité conforme à l'invention est formée par un profilé en matière déformable élastiquement, d'épaisseur globale supérieure à l'intervalle annulaire entre les abouts complémentaires de deux tuyaux emboîtés, présentant :

dans son épaisseur radiale, un logement annulaire s'ouvrant par une fente et destiné à recevoir un implant annulaire rigide formant une âme de contrainte,

sur sa face périphérique interne une moulure à section droite transversale prismatique, caractérisée en ce qu'elle présente :

sur sa face périphérique extérieure destinée à coopérer avec la portée cylindrique de l'about femelle d'un tuyau, une succession de nervures annulaires affectant chacune en section droite transversale une forme de dent asymétrique,

dans son épaisseur radiale, deux logements annulaires s'ouvrant par des fentes dans la face périphérique interne et destinés à recevoir deux implants annulaires rigides formant âmes de contrainte,

sur sa face périphérique interne, deux moulures à section droite transversale prismatique et inclinées en direction du bord transversal d'engagement de ladite bague dans l'about femelle d'un tuyau.

Diverses autres caractéristiques ressortent de la description faite ci-dessous en référence aux dessins annexés qui montrent, à titre d'exemples non limitatifs, des formes de réalisation de l'objet de l'invention.

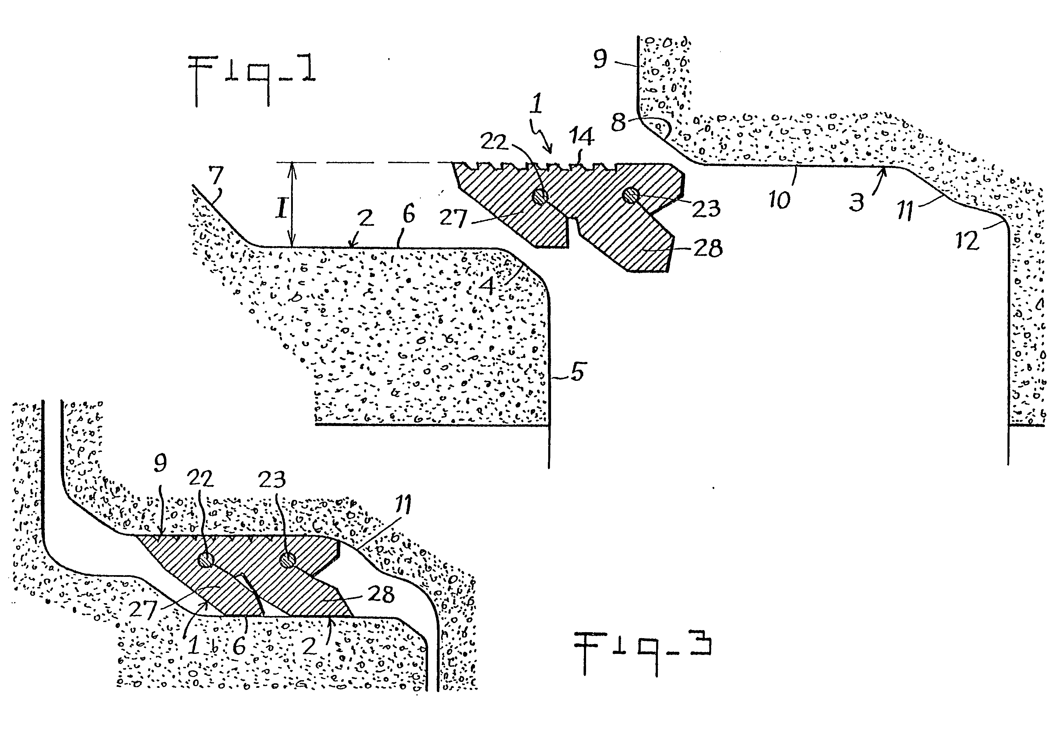

La fig. 1 est une demi-coupe élévation des abouts complémentaires de deux tuyaux devant être emboîtés avec mise en place d'une bague d'étanchéité conforme à l'invention.

La fig. 2 est une coupe transversale montrant, à plus grande échelle, la structure de l'objet de l'invention.

La fig. 3 est une demi-coupe analogue à la fig. 1, mais illustrant une autre position caractéristique.

La fig. 4 est une coupe transversale, analogue à la fig. 3, mais illustrant une variante de réalisation.

La bague d'étanchéité, désignée dans son ensemble par la référence 1, est prévue pour assurer le centrage et l'étanchéité entre les abouts mâle 2 et femelle 3 de deux tuyaux destinés à la construction de réseaux enterrés de circulation de produits liquides divers. Les tuyaux sont représentés, à titre d'exemple, sous la forme de produits réalisés en béton armé ou non. La bague d'étanchéité s'apppplique, toutefois, à tous tuyaux en toutes matières.

De façon traditionnelle, l'about mâle 2 comporte une rampe 4 de raccordement entre la face transversale d'extrémité 5 et la portée cylindrique extérieure 6 qui est raccordée au corps de tuyau par une rampe 7.

L'about femelle ou collet 3 comporte une rampe 8 ménagée entre la face transversale 9 et une portée cylindrique intérieure 10. L'about 3 est conformé, intérieurement, pour comporter un rebord d'appui 11 prévu en saillie de l'épaulement de butée 12 constituant le fond de l'about 3.

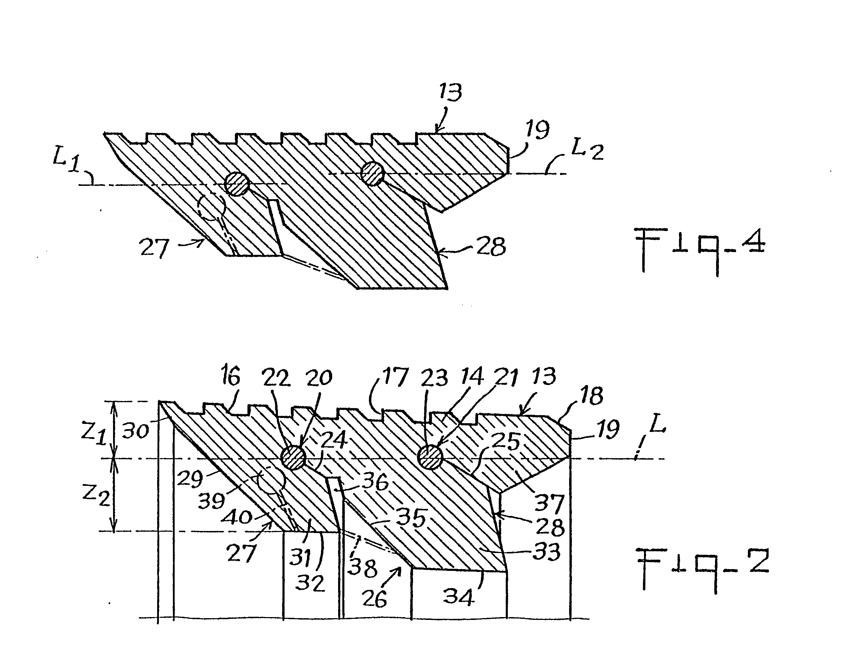

La bague d'étanchéité 1 est destinée à être interposée entre les portées cylindriques 6 et 10, emboîtées relativement. La bague 1, illustrée plus en détail à la fig. 2, est réalisée sous la forme d'un profilé en matière déformable élastiquement pouvant être obtenue par moulage ou, encore, par extrusion. Dans un tel cas, la bague 1 est constituée à partir d'un segment de profilé coupé à longueur convenable et dont les extrémités sont raboutées par tout moyen convenable, afin de former un anneau continu. Le profilé est conformé de manière à présenter une épaisseur radiale globale qui est, à l'état de repos, supérieure à la mesure radiale de l'intervalle I existant entre les abouts mâle 2 et femelle 3, placés concentriquement en emboîtement relatif.

Le profilé constitutif de la bague 1 est réalisé de manière à présenter, dans sa paroi périphérique extérieure 13, des nervures annulaires 14 qui peuvent être formées en saillie ou être le résultat de la présence de rainures 15, comme cela apparaît à la fig. 2. Les nervures 14 présentent, en section droite transversale, une forme asymétrique comprenant un côté 16 incliné pour faciliter l'engagement de la bague dans le sens de la flèche $f_1$, à l'intérieur de l'about collet 3. Le côté 16 est raccordé, directement ou par l'intermédiaire d'un sommet plan, à une face abrupte 17. La surface périphérique 13 est reliée, par un chanfrein 18 au bord transversal 19 d'engagement de la bague à l'intérieur de l'about collet.

Dans la forme d'exécution illustrée à la fig. 2, la face périphérique extérieure 13 est définie par une enveloppe tronconique, dont la petite base correspond au bord transversal 19.

Le profilé est conformé de manière à délimiter dans son épaisseur deux logements annulaires 20 et 21 qui sont délimités, dans le cas présent, pour être situés sur un même lieu géométrique commun L présentant la particularité d'être centré sur l'axe de la bague. Les logements 20 et 21 sont destinés à contenir des implants 22 et 23, en matière indéformable, par exemple constituée par des anneaux toriques fermés en acier. Selon l'invention, ces anneaux toriques 22 et 23 possèdent un diamètre légèrement supérieur à celui des logements 20 et 21. La présence des anneaux 22-23 dans les logements se traduit par une contrainte sollicitant en expansion radiale la matière déformable élastiquement constitutive du profilé, comprise entre le lieu géométrique L et la surface périphérique extérieure 13 elle-même sollicitée en expansion radiale. Compte tenu de la conformation de la surface périphérique 13, on conçoit que cette expansion se développe plus fortement au droit du logement 21 situé le plus près du bord d'engagement 19.

Les logements 20 et 21 s'ouvrent par deux fentes 24 et 25, au niveau de la face périphérique intérieure 26. Les fentes permettent le montage des implants 22 et 23 dans les logements 20 et 21. Il devient ainsi possible de disposer en stock de bagues d'étanchéité dépourvues des implants 22 et 23 et qui ne subissent donc pas de contrainte permanente pendant la durée de stockage.

Le profilé est réalisé de manière à comporter, sur sa face périphérique interne 26, deux moulures 27 et 28 affectant, en section droite transversale, une forme prismatique. Ces moulures sont orientées ou inclinées dans le sens facilitant l'engagement relatif de la bague sur la portée cylindrique 6 d'un about collet 2. La première moulure 17 est raccordée par une rampe de glissement 29 au bord transversal 30 de la bague opposée au bord 19. La rampe 29 se raccorde à une tête 31 de section triangulaire comprenant une face 32 annulaire, centrée sur l'axe de la bague. La seconde moulure 28 possède une section de plus forte épaisseur que la première moulure 27 et s'étend sur une étendue radiale supérieure à cette dernière. La moulure 28 possède une tête triangulaire 33 qui est définie par une face 34 raccordée par une rampe 35 à un intervalle ou gorge 36 séparant les deux moulures. La tête 33 de seconde moulure 28 est raccordée à un talon 37 annulaire formé entre cette moulure et le bord 19.

Le profilé est exécuté de manière que les fentes 24 et 25 s'étendent, de façon inclinée, en direction du bord transversal 19 depuis les logements 20 et 21, pour déboucher respectivement dans la gorge 36 et entre la moulure 28 et le talon 37.

La mise en place de la bague d'étanchéité décrite ci-dessus s'effectue en l'introduisant, par le bord transversal 19, à l'intérieur d'un about collet ou femelle 3 d'un tuyau. Cet engagement est facilité par l'amenée en contact du chanfrein 18 avec la rampe 8 et aussi grâce à la forme tronconique de la paroi périphérique extérieure 13. Cet engagement est effectué, de préférence, dans un état d'équipement complet, c'est-à-dire après montage des implants 22 et 23 dans les logements 20 et 21.

L'engagement axial dans le sens de la flèche $f_1$ est poursuivi, de manière à provoquer la déformation des nervures 14 qui, par réaction à la contrainte qui leur est imposée, assume, après engagement, une fonction d'ancrage annulaire dans la portée 10.

Cet ancrage est aussi entretenu par l'action de précontrainte de la masse de matière déformable élastiquement comprise entre la face périphérique extérieure 13 et les implants 22 et 23 qui assument ainsi une première fonction de raidissement et de tenue mécanique de la bague, ainsi qu'une seconde fonction de précontrainte de cette matière.

Dans cet état, la bague est immobilisée et ancrée dans la portée cylindrique 10 de l'about femelle ou collet 3, sans risque de déplacement intempestif, étant donné que les implants 22 et 23 forment une armature indéformable dans le sens radial et sur laquelle prennent appui les contraintes locales de déformation, imposées par le fluage de la matière constitutive du profilé.

Lors d'un emboîtement de deux tuyaux par engagement de l'about mâle 2, la rampe 4 prend contact avec la rampe de glissement 29 et sollicite en flexion la première moulure 27 qui pivote par appui contre le tore 22. La moulure 27 assume, dans cette phase, une fonction de centrage de l'about mâle par rapport à l'about femelle.

La pénétration plus importante de l'about mâle 2 amène la rampe 4 en contact avec la rampe 35, ce qui a pour effet de solliciter la seconde moulure 28 dans le même sens que la première moulure 27 par appui sur le tore 23. Après engagement complet, tel que représenté à la fig. 3, la moulure 28 enserre périphériquement l'about mâle 2 et assume une fonction de lèvre d'étanchéité.

Outre les avantages ci-dessus, il y a lieu de noter que le profilé est conformé de manière à laisser subsister, entre les logements 20 et 21 et la face périphérique 13, une masse de matière déformable élastiquement, plus faible que celle comprise entre ces logements et les surfaces 32 et 34 des moulures 27 et 28. Ainsi, la bague possède deux zones $Z_1$ et $Z_2$, à caractéristiques de déformabilité différentielle pouvant s'adapter exactement aux tolérances de fabrication qui sont, généralement, de par le procédé de fabrication retenu, plus faibles pour ce qui concerne les abouts collet ou femelle 3 que pour les abouts mâles 2.

Il est avantageux d'utiliser la gorge 36, normalement réservée au fluage de la matière constitutive de la moulure 27, pour inclure à la bague une réserve de produit lubrifiant sous forme de pâte ou analogue.

Ainsi, lors de l'introduction ou de la pénétration de l'embout mâle 2, la déformation imposée à la première moulure 27 refoule la matière lubrifiante qui vient se déposer le long de la rampe 35 pour favoriser le glissement entre cette dernière et la portée cylindrique 6 de l'about 2. La fig. 2 montre qu'il peut être avantageux de réaliser le profilé pour faire comporter une lèvre 38 dans le prolongement de la surface 32 de la moulure 27. La lèvre 37 ferme la gorge 36 et contribue au maintien, dans de bonnes conditions de stockage, de la réserve de produit lubrifiant qui y est déposée.

La fig. 2 montre qu'il peut être prévu, également, de conformer le profilé de manière à diviser la masse constitutive de la première moulure 27 en deux parties délimitant entre elles une poche annulaire 39 pouvant être remplie d'un produit lubrifiant.

Ainsi, lors de l'amenée en contact de la rampe 29 avec la rampe 4, la contrainte appliquée tend à fermer la poche 39, ce qui expulse la matière lubrifiante qui se répartit à la surface 32 pour faciliter l'introduction et la pénétration de l'about mâle 2. Il peut être prévu de faire communiquer la poche 39 avec une fente 40 s'ouvrant dans la partie de raccordement entre la surface 32 et la rampe 29.

La fig. 4 montre une variante de réalisation selon laquelle la face périphérique 13 définit une enveloppe cylindrique centrée sur l'axe de la bague. Dans un tel cas, les logements 20 et 21 sont situés sur deux lieux géométriques circulaires différents $L_1$-$L_2$ décalés relativement, le logement 21 correspondant au lieu de plus grand diamètre, de manière à accroître la contrainte locale par l'intermédiaire de l'implant 23 d'une façon analogue à ce qui est décrit dans l'exemple précédent.

Il est à observer que l'orientation des fentes 24 et 25 est choisie pour éviter tout dégagement intempestif des anneaux toriques 22-23 lors de la pénétration de l'about mâle 2. En effet, dans cette phase, la contrainte imposée aux moulures tend à fermer les fentes 24 et 25.

Malgré la qualité d'ancrage résultant de la mise en place de la bague dans un about femelle 3, il doit être noté que la structure selon l'invention réserve une possibilité de retrait. En effet, il suffit de solliciter successivement chaque fente en ouverture en agissant sur les moulures pour dégager les anneaux toriques formant armatures. Le profilé peut ainsi être plus aisément déformé pour faciliter son extraction sans destruction.

## Revendications

1. Bague d'étanchéité à implants pour tuyaux à emboîtement, formée par un profilé en matière déformable élastiquement, d'épaisseur globale supérieure à l'intervalle annulaire entre les abouts complémentaires de deux tuyaux emboîtés, présentant :

dans son épaisseur radiale, un logement annulaire s'ouvrant par une fente et destiné à recevoir un implant annulaire rigide formant une âme de contrainte,

sur sa face périphérique interne une moulure à section droite transversale prismatique, caractérisée en ce qu'elle présente :

sur sa face périphérique extérieure (13) destinée à coopérer avec la portée cylindrique (10) de l'about femelle (3) d'un tuyau, une succession de nervures annulaires (14) affectant chacune en section droite transversale une forme de dent asymétrique,

dans son épaisseur radiale, deux logements annulaires (20-21) s'ouvrant par des fentes (24-25) dans la face périphérique interne (26) et destinés à recevoir deux implants annulaires (22-23) rigides formant âmes de contrainte,

sur sa face périphérique interne, deux moulures (27-28) à section droite transversale prismatique et inclinées en direction du bord transversal (19) d'engagement de ladite bague dans l'about femelle (3) d'un tuyau.

2. Bague d'étanchéité selon la revendication 1, caractérisée en ce que les logements (20-21) occupent un même lieu géométrique circulaire (L) centré sur un axe perpendiculaire aux bords (30-19) transversaux de la bague.

3. Bague d'étanchéité selon la revendication 2, caractérisée en ce que la face périphérique extérieure (13) définit une enveloppe tronconique dont la petite base correspond au bord transversal (19) d'engagement de la bague dans un about femelle.

4. Bague d'étanchéité selon la revendication 1, caractérisée en ce que les logements occupent deux lieux géométriques circulaires ($L_1$-$L_2$) de diamètres différents.

5. Bague d'étanchéité selon la revendication 4, caractérisée en ce que le logement (21) occupant le lieu géométrique ($L_2$) de plus grand diamètre est situé le plus près du bord transversal (19) d'engagement relatif de la bague à l'intérieur d'un about femelle (3) d'un tuyau.

6. Bague d'étanchéité selon la revendication 4 ou 5, caractérisée en ce que la face périphérique extérieure (13) définit une enveloppe cylindrique centrée sur l'axe de la bague.

7. Bague d'étanchéité selon l'une des revendications 1 à 6, caractérisée en ce que les logements (20-21) présentent, à l'état de repos, un diamètre inférieur à celui des implants (22-23).

8. Bague d'étanchéité selon la revendication 1 ou 7, caractérisée en ce que les implants (22-23) sont constitués par des anneaux toriques en matière indéformable.

9. Bague d'étanchéité selon l'une des revendications 1, 3 ou 6, caractérisée en ce que la face périphérique extérieure (13) est raccordée au bord transversal (19) d'engagement dans un about femelle (3) par un chanfrein d'engagement (18) et comporte des nervures (14) possédant chacune une face (16) inclinée dans le sens d'engagement relatif dans un about femelle et une face abrupte (17).

10. Bague d'étanchéité selon l'une des revendications 1, 2, 3 ou 7, caractérisée en ce que les logements (20-21) sont ménagés pour répartir, entre eux et la face périphérique externe, une masse ($Z_1$) de matière déformable de plus faible épaisseur radiale que celle ($Z_2$) comprise entre eux et la face périphérique interne (26).

11. Bague d'étanchéité selon la revendication 1, caractérisée en ce que la face périphérique interne (26) comporte en saillie une première moulure (27) raccordée par une rampe de glissement (29) au bord transversal (30) de la bague opposé à celui (19) d'engagement dans un about femelle (3) et une seconde moulure (28) de plus forte section et de plus grande étendue radiale que la première moulure.

12. Bague d'étanchéité selon la revendication 1 ou 11, caractérisée en ce que la plus grosse moulure (28) est raccordée au bord transversal (19) d'engagement dans un about femelle par un talon d'appui (37).

13. Bague d'étanchéité selon la revendication 1 ou 11, caractérisée en ce que les moulures (27-28) sont associées à une réserve de produit lubrifiant.

14. Bague d'étanchéité selon la revendication 13, caractérisée en ce que la première moulure (27) est prolongée par une lèvre souple (38) recouvrant au moins en partie la gorge annulaire (36) qui contient une réserve de graisse.

15. Bague d'étanchéité selon la revendication 1, 12 ou 13, caractérisée en ce que les fentes (24-25) des logements aboutissent respectivement dans la gorge (36) et entre la seconde moulure (28) et le talon d'appui (37).

16. Bague d'étanchéité selon la revendication 1, caractérisée en ce qu'elle est réalisée par moulage.

17. Bague d'étanchéité selon la revendication 1, caractérisée en ce qu'elle est constituée à partir d'un profilé extrudé, coupé à longueur et abouté par ses extrémités.

18. Bague d'étanchéité selon la revendication 1 ou 15, caractérisée en ce que les fentes (24-25) s'étendent depuis les logements (20-21) de façon inclinée en direction du bord transversal d'engagement (19).

**Claims**

1. Gasket with implants for spigot pipes, formed by a section in elastically deformable material, of overall thickness greater than the annular interval between the complementary ends of two spigot pipes, provided :

in its radial thickness, with an annular housing which is open via a slot, and which is designed to receive a rigid annular implant forming a strain-resisting core,

on its internal peripheral face, with a molding of prismatic cross-section, characterized in that it is provided :

on its outer peripheral face (13) designed to cooperate with the cylindrical bearing surface (10) of the female end (3) of a pipe, with a succession of annular ribs (14), each one having in cross-section the form of an asymmetrical tooth,

in its radial thickness, with two annular housings (20-21) opening via slots (24-25) into the inner peripheral face (26) and designed to receive two rigid annular implants (22-23) forming strain-resisting cores,

on its inner peripheral face, with two moldings (27-28) of prismatic cross-section, inclined towards the transversal edge (19) of said gasket which engages the female end (3) of a pipe.

2. Gasket according to claim 1, characterized in that the housings (20-21) occupy the same circular geometrical area (L) centered on an axis perpendicular to the transversal edges (30-19) of the gasket.

3. Gasket according to claim 2, characterized in that the outer peripheral face (13) defines a truncated envelope of which the large base corresponds to the transversal edge (19) of the gasket which is engageable in a female end part.

4. Gasket according to claim 1, characterized in that the housings occupy two circular geometrical areas ($L_1$-$L_2$) of different diameters.

5. Gasket according to claim 4, characterized in that the housing (21) which occupies geometrical area ($L_2$) of larger diameter is situated as close as possible to the transversal edge of the gasket which is engageable into the female end part (3) of a pipe.

6. Gasket according to claim 4 or 5, characterized in that the outer peripheral face (13) defines a cylindrical envelope centered on the axis of the gasket.

7. Gasket according to any one of claims 1 to 6, characterized in that the housings (20-21) have, in rest position, a diameter smaller than that of the implants (22-23).

8. Gasket according to claim 1 or 7, characterized in that the implants (22-23) are constituted by 0-rings in indeformable material.

9. Gasket according to one of claims 1, 3 or 6, characterized in that the outer peripheral face (13) is joined to the transversal edge (19) which is engageable in a female end part (3) via an engagement bevel (18) and comprises ribs (14) each rib having a face (16) inclined in the direction of relative engagement in a female end part and a steep face (17).

10. Gasket according to one of claims 1, 2, 3 or 7, characterized in that the housings (20-21) are provided in order to distribute, between them and the outer peripheral face, a mass ($Z_1$) of deformable material of smaller radial thickness than that ($Z_2$) comprised between them and the internal peripheral face (26).

11. Gasket according to claim 1, characterized in that the internal peripheral face (26) comprises, in projection, a first molding (27) joined, via a sliding ramp (29) to the transversal edge (30) of the gasket which is opposite the edge (19) engageable in a female end part (3) and a second molding (28) of larger cross-section and of larger radial extent than the first molding.

12. Gasket according to claim 1 or 11, characterized in that the larger molding (28) is joined to the transversal edge (19) engageable in a female end part via a supporting heel member (37).

13. Gasket according to claim 1 or 11, characterized in that the moldings (27-28) are associated to a reserve of lubricating product.

14. Gasket according to claim 13, characterized in that the first molding (27) is extended by a supple lip (38) which covers at least partly the annular groove (36) containing a reserve of grease.

15. Gasket according to claim 1, 12 or 13, characterized in that the slots (24-25) of the housings issue respectively into the groove (36) and between the second molding (28) and the supporting heel member (37).

16. Gasket according to claim 1, characterized in that it is produced by molding.

17. Gasket according to claim 1, characterized in that it is constituted from an extruded section, cut to a certain length and butt-joined by its ends.

18. Gasket according to claim 1 or 15, characterized in that the slots (24-25) extend from the housings (20-21) in inclined manner in the direction of the engageable transversal edge (19).

**Patentansprüche**

1. Dichtring mit Einsätzen für ineinandersteckbare Rohre, der aus einem Formteil aus elastisch deformierbarem Material besteht, mit einer Dicke, die allgemein größer als der ringförmige Zwischenraum zwischen den komplementären Enden zweier ineinandergesteckter Rohre ist, mit :

einer ringförmigen Lagerfläche innerhalb seiner radialen Dicke, die durch einen Schlitz geöffnet und dazu bestimmt ist, einen steifen ringförmigen Einsatz aufzunehmen, der eine Armierungsseele bildet,

einer an der Innenwandfläche angebrachten Rippe mit prismatischen geraden Querschnitt, gekennzeichnet durch ein Rohr und eine Aufeinanderfolge ringförmiger Rippen (14), die jeweils im Querschnitt die Form asymmetrischer Zähne aufweisen und auf der äußeren Randfläche (13) angeordnet sind, um mit der zylinderförmigen Lagerfläche (10) des Buchsenendstücks (3) eines Rohres zusammenzuwirken,

zwei ringförmige Lagerflächen (20-21) in seiner radialen Dicke, die durch Schlitze (24-25) in der Innenseite (26) geöffnet sind und dazu bestimmt sind, zwei starre ringförmige Einsätze (22-23) aufzunehmen, die Armierungsseelen bilden, und

auf seiner Innenfläche zwei Stege (27-28) mit prismatischem Querschnitt, die in Richtung auf den transversalen Rand (19) des Eingriffs des Rings in das Muffenstück (3) eines Rohrs, geneigt sind.

2. Dichtring nach Anspruch 1, dadurch gekennzeichnet, daß die Lagerflächen (20-21) den selben geometrischen kreisförmigen Raum (L) einnehmen, der bezüglich einer Achse zentriert ist, die senkrecht zu den transversalen Rändern (30-19) des Rings steht.

3. Dichtring nach Anspruch 2, dadurch gekennzeichnet, daß die äußere Randfläche (13) einen kegelstumpfförmigen Mantel definiert, dessen kleine Basis dem transversalen Eingriffsrand (19) des Rings in das Muffenstück entspricht.

4. Dichtring nach Anspruch 1, dadurch gekennzeichnet, daß die Lagerflächen zwei geometrische Ringräume ($L_1$-$L_2$) mit unterschiedlichen Durchmessern einnehmen.

5. Dichtring nach Anspruch 4, dadurch gekennzeichnet, daß die Lagerfläche (21), die den geometrischen Ort ($L_2$) mit größerem Durchmesser einnimmt, näher an dem transversalen Rand (19) des Eingriffs des Rings im Inneren der Muffe (3) eines Rohres liegt.

6. Dichtring nach Anspruch 4 oder 5, dadurch gekennzeichnet, daß die Außenfläche (13) eine Zylindermantelfläche bildet, die bezüglich der Ringachse zentriert ist.

7. Dichtring nach einem der Ansprüche 1 bis 6,

dadurch gekennzeichnet, daß die Lager (20-21) im Ruhezustand einen Durchmesser haben, der kleiner als der der Einsätze (22-23) ist.

8. Dichtring nach einem der Ansprüche 1 oder 7, dadurch gekennzeichnet, daß die Einsätze (22-23) aus torischen Ringen aus unverformbarem Material bestehen.

9. Dichtring nach einem der Ansprüche 1, 3 oder 6, dadurch gekennzeichnet, daß die Außenfläche (13) mit dem Eingriffsrand (19) in ein Muffenstück (3) über eine Einsetzabschrägung (18) verbunden ist und Rippen (14) aufweist, mit jeweils einer Seite (16), die in Eingriffrichtung in ein Muffenstück geneigt ist und mit einer steil abfallenden Seitenfläche (17).

10. Dichtring nach einem der Ansprüche 1, 2, 3 oder 7, dadurch gekennzeichnet, daß die Lagerflächen (20-21) so angeordnet sind, daß sie zwischen sich und der äußeren Randfläche eine Masse ($Z_1$) aus deformierbarem Material mit geringerer radialer Dicke als die Dicke ($Z_2$), die zwischen den Lagerflächen und der inneren Randfläche (26) besteht, aufzunehmen.

11. Dichtring nach Anspruch 1, dadurch gekennzeichnet, daß die innere Randfläche (26) einen ersten vorstehenden Steg (27) aufweist, der über eine Gleitrampe (29) am transversalen Rand (30) des Rings befestigt ist, der dem Eingriffsrand (19) in einem Muffenstück (3) gegenüberliegt und dadurch, daß die innere Randfläche einen zweiten Steg (28) mit größerem Querschnitt und größerer radialer Erstreckung als der erste Steg aufweist.

12. Dichtring nach Anspruch 1 oder 11, dadurch gekennzeichnet, daß der dickere Steg (28) am transversalen Rand (19) zum Eingriff in ein Muffenstück über einen Auflageabsatz (37) befestigt ist.

13. Dichtring nach Anspruch 1 oder 11, dadurch gekennzeichnet, daß den Stegen (27-28) ein Schmiermittelvorrat zugeordnet ist.

14. Dichtring nach Anspruch 13, dadurch gekennzeichnet, daß der erste Steg (27) mit einer weichen Lippe (38) verlängert ist, die mindestens teilweise die Ringnut (36) abdeckt, die einen Fettvorrat enthält.

15. Dichtring nach Anspruch 1, 12 oder 13, dadurch gekennzeichnet, daß die Schlitze (24-25) der Lagerflächenjeweils in der Nut (36) und zwischen dem zweiten Steg (28) und dem Auflagerabsatz (37) münden.

16. Dichtring nach Anspruch 1, dadurch gekennzeichnet, daß er durch Gießen hergestellt ist.

17. Dichtring nach Anspruch 1, dadurch gekennzeichnet, daß er ausgehend von einem stranggegossenen Formstück hergestellt ist, das in der Länge zugeschnitten und an seinen Enden verbunden wird.

18. Dichtring nach Anspruch 1 oder 15, dadurch gekennzeichnet, daß die Schlitze (24-25) sich ausgehend von den Lagerflächen (20-21) in Richtung auf den transversalen Eingriffsrand (19) geneigt erstrecken.

Fig-1

Fig-3

0 130 133

Fig-4

$L_1$ $L_2$ 13 19 27 28

Fig-2

16 22 20 17 23 14 21 13 18 19 $L$
$Z_1$ 30 24 25
29 36 37
39 35 28
40 27 31 38 33
32 26 34
$Z_2$